**Europäisches Patentamt**

**European Patent Office**

**Office européen des brevets**

(19)

(11) Veröffentlichungsnummer: **0 275 544 B1**

(12) **EUROPÄISCHE PATENTSCHRIFT**

(45) Veröffentlichungstag der Patentschrift:
05.06.91 Patentblatt 91/23

(51) Int. Cl.$^5$: **C09J 197/02**, C08L 97/02

(21) Anmeldenummer: **87119182.1**

(22) Anmeldetag: **24.12.87**

(54) **Emissionsarmes Bindemittel für holz- und cellulosehaltige Werkstoffe.**

(30) Priorität: **24.12.86 DE 3644397**

(43) Veröffentlichungstag der Anmeldung:
**27.07.88 Patentblatt 88/30**

(45) Bekanntmachung des Hinweises auf die
Patenterteilung:
**05.06.91 Patentblatt 91/23**

(84) Benannte Vertragsstaaten:
**AT BE CH DE ES FR GB GR IT LI LU NL SE**

(56) Entgegenhaltungen:
**BE-A- 683 041**
**DE-A- 3 037 992**
**FR-A- 2 183 176**
**US-A- 4 186 242**
**ADHÄSION, 1961, 5 Jahrgang Verlagsort Berlin, Nr. 4, Seiten 169-172; M. KRAHL:**
**"Anwendung von Ligninharzen und Lignin unter besonderer Berücksichtigung des Aktivlignins aus dem Udic-Rheinau-Verfahren"**

(73) Patentinhaber: **G.A. Pfleiderer**
**Unternehmensverwaltung GmbH & Co. KG**
**Ingolstädter Strasse 51 Postfach 1480**
**W-8430 Neumarkt/Opf. (DE)**

(72) Erfinder: **Haars, Annegret, Dr.**
**Am Schuhhof 3**
**W-3380 Goslar (DE)**
Erfinder: **Hüttermann, Aloys, Prof. Dr.**
**Büsgenweg 2**
**W-3400 Göttingen (DE)**
Erfinder: **Kharazipour, Alireza, Dr.**
**Büsgenweg 2**
**W-3400 Göttingen (DE)**

(74) Vertreter: **Harders, Gerhard, Dr.**
**Stettiner Strasse 2**
**W-6367 Karben 6 (DE)**

## Beschreibung

Die vorliegende Erfindung betrifft ein emissionsarmes Bindemittel für holz- und cellulosehaltige Werkstoffe, bestehend aus wässrigen Suspensionen bzw. Lösungen von ligninartigen Abfallstoffen aus dem chemischen Holzaufschluß der Lignocellulose in der Zellstoffindustrie bzw. von Abfällen der Holzrindenverwertung, und phenoloxidierenden Enzymen.

In der US-PS 4 279 788 ist ein Bindemittel, insbesondere für Platten aus Holzmaterialien, beschrieben, das aus einer Mischung aus Isocyanat und Lignin aus dem chemischen Aufschluß der Holz-Lignocellulose in der Zellstoffindustrie stammt. Dabei wird die Lignin-haltige Ablauge der Zellstoffherstellung mit einem Isocyanat mit einem Molgewicht von 200 bis 10.000 unter Zusatz geringer Mengen Wasser umgesetzt. Der so erhaltene Leim wird auf holzhaltige Werkstoffe aufgebracht.

Die Herstellung von Klebstoffen auf Isocyanatbasis ist bekannt. Die Isocyanate werden entweder mit Polyolen zu Polyurethanen umgesetzt, oder sie reagieren mit Wasser unter Bildung von Polyharnstoffen, wobei $CO_2$ abgespalten wird. Die Verklebung von Holz mit Diisocyanaten bzw. Polyurethanen ist beispielsweise in der DE-PS 851 100 beschrieben.

Diisocyanate haben den Nachteil, daß sie eine hohe Reaktivität gegenüber Verbindungen aufweisen, die aktiven Wasserstoff enthalten, wie z.B. die Proteine in menschlichen oder tierischen Zellen. Es war deshalb eine nachteilige Beeinflussung aller durch Enzyme katalysierten Reaktionen zu erwarten, wenn Isocyanat eingesetzt wird.

Um bei Spanplatten eine dauerhafte Verleimung beispielsweise nach den DIN-Normen zu gewährleisten, müssen bei Verwendung von Polyurethanen mindestens etwa 3 bis 5% Isocyanat eingesetzt werden. Neben dem hohen Preis der Isocyanate stehen dem Einsatz solcher Mengen die bereits geschilderten gesundheitlichen Bedenken entgegen.

Es wurden auch bereits Formaldehyd-Harze, wie beispielsweise Harnstoff-Formaldehyd-Harze oder Melamin-Formaldehyd-Harze, als Bindemittel für Holzwerkstoffe, beispielsweise Spannplatten, verwendet. Die Formaldehyd-Komponente dieser Bindemittel ist ein starkes Zellgift, ihre Anwendung stößt daher auf Bedenken.

Aus der DE-PS 30 37 992 ist es bekannt, Holzwerkstoffe, beispielsweise Spanplatten, mit Ligninsulfonat und phenoloxidierenden Enzymen zu verkleben. Mit diesen Bindemitteln hergestellte Spanplatten haben jedoch ein ungenügendes Quellungsverhalten.

Aufgabe der vorliegenden Erfindung ist es, ein Bindemittel für die dauerhafte Verleimung von holz- und cellulosehaltigen Werkstoffen zu schaffen, in dem billige Abfallstoffe, wie z.B. Sulfitablaugen, verwertet werden können und in dem der Anteil der gesundheitsgefährdenden Bindemittel-Komponenten möglichst weit abgesenkt werden kann.

Die Aufgabe wird durch Bindemittel entsprechend Anspruch 1 gelöst.

Dabei kann die Menge des als zusätzliche Bindemittel-Komponente dienenden polymeren Kunstharzes auf mehr als die Hälfte der bisher beim Verkleben von Holzwerkstoffen, beispielsweise von Spanplatten, verwendeten Menge abgesenkt werden.

Es wurde überraschenderweise gefunden, daß beim Einsatz von phenoloxidierenden Enzymen gemeinsam mit den bei der Verleimung von holz- und cellulosehaltigen Werkstoffen üblicherweise verwendeten Polymer-Kunstharzen eine Verleimung möglich ist, ohne daß die Kunstharze die Enzymwirkung nachteilig beeinflussen. Im Gegensatz zu der bisher beobachteten schädlichen Auswirkung der Kunstharze auf Proteine bzw. Enzyme wurde dabei festgestellt, daß die bei der Verleimung von holz- und cellulosehaltigen Werkstoffen erhaltene Klebkraft nicht vermindert, sondern sogar noch verstärkt wird.

Demgemäß wird die Aufgabe der vorliegenden Erfindung dadurch gelöst, daß die Bindemittel–Suspensionen bzw. -Lösungen als zusätzliche Bindemittel-Komponente Isocyanat-, Harnstoff-Formaldehyd- oder Melamin-Formaldehyd-Harze enthalten.

Die mit dem erfindungsgemäßen Bindemittel hergestellten Verleimungen weisen eine Wasserbeständigkeit auf, die bisher mit Enzymverleimungen nicht erreicht werden konnte.

Die erfindungsgemäßen Bindemittel eignen sich für die Verleimung von Spanplatten, Wafer-Boards, Sperrholz, Furnierplatten, Holzfaserplatten, Hartfaserplatten, beschichtetes Nutzholz und dergl.

Unter ligninartigen Abfallstoffen sollen Ligninverbindungen oder -derivate verstanden werden, beispielsweise Organosolvlignin oder ASAM-Lignin oder die Ligninderivate Sulfitablaugenlignin oder Sulfatablaugenlignin. Bevorzugt werden getrocknete Pulver oder hochkonzentrierte Suspensionen eingesetzt. Als Abfall der Holzrindenverwertung kommen insbesondere hoch- und niedermolekulare Tannine in Betracht.

Die Konzentration der ligninartigen Abfallstoffe bzw. der Abfälle der Holzrindenverwertung in der Suspension bzw. Lösung aller Komponenten beträgt etwa 10 bis 70 Gew.-%, ausgedrückt als Prozent Feststoffgehalt in der gesamten Suspension bzw. Lösung aller Komponenten. Bevorzugt werden etwa 30 bis 66 Gew.-% Feststoffgehalt eingesetzt.

Als phenoloxidierende Enzyme kommen die in der DE-PS 30 37 992 genannten Enzyme in Frage, beispielsweise Laccase, Tyrosinase oder Peroxidase.

Die Herstellung dieser Enzyme, beispielsweise aus Pilzen, wie Weißfäulepilzen, ist in der DE-PS 30 37 992 beschrieben.

Die Konzentration der phenoloxidierenden Enzyme in der Suspension bzw. Lösung soll etwa 10 bis 5000 Einheiten pro ml (U/ml) betragen, vorzugsweise etwa 50 bis 1000 U/ml. Die Charakterisierung und Bestimmung der zur Definition verwendeten Enzymeinheiten ist beispielsweise in der EU-PS 49 831 beschrieben.

Der Kunstharzgehalt der Bindemittel-Suspensionen bzw. -Lösungen liegt im Bereich von etwa 1 Gew.-% bis etwa 15 Gew.-%, bezogen auf den Gesamtfeststoffgehalt der Suspension bzw. Lösung. Bevorzugt werden etwa 3 bis 8 Gew.-% eingesetzt.

Zum Verleimen von holz- und cellulosehaltigen Werkstoffen werden die Bindemittel-Suspensionen bzw. Lösungen in Mengen von etwa 3 bis etwa 20 Gew.-% verwendet, bevorzugt in Mengen von etwa 8 bis etwa 15 Gew.-%, bezogen auf atro (absolut trockenes) Holz. Bei der Verwendung von Isocyanat werden entsprechend der Gesamtzusammensetzung die Einsatzmengen so gewählt, daß der Gehalt an Isocyanat höchstens etwa 2,5 Gew.-% beträgt, wobei der Isocyanatgehalt bevorzugt etwa 0,3 bis 2,5 Gew.-% und insbesondere etwa 0,5 bis 1,5 Gew.-% nicht übersteigen soll.

Bei der Verwendung von Formaldehyd-Harzen beträgt die Einsatzmenge etwa 0,5 bis 7 Gew.-%, bevorzugt etwa 1 bis 6 Gew.-% und insbesondere etwa 3 bis 5 Gew.-%, bezogen auf atro Holz.

Die im Stand der Technik verwendeten Einsatzmengen liegen demgegenüber bei etwa 8 bis 12 Gew.-% beim Einsatz von Formaldehydharzen und bei etwa 3 bis 5 Gew.-% beim Einsatz von Isocyanat.

Zur Erreichung üblicher Verleimungsfestigkeiten, beispielsweise in der Spanplattenindustrie, läßt sich somit der Gehalt des Bindemittels an Isocyanat gegenüber den bisher eingesetzten Isocyanatbindemitteln auf mehr als die Hälfte absenken.

Als Polymer-Kunstharze werden die für die Verleimung von holz- bzw. cellulosehaltigen Werkstoffen üblichen Harze aus der Gruppe der Isocyanate, Harnstoff-Formaldehyd- und Melamin-Formaldehyd-Harze eingesetzt, insbesondere solche, die sich für die Spanplattenherstellung eignen.

Die Herstellung des erfindungsgemäßen Bindemittels kann erfolgen, indem die einzelnen Komponenten durch einfaches Vermischen unter Rühren zur Reaktion gebracht werden, beispielsweise bei Temperaturen von etwa 10 bis maximal etwa 60°C.

Als Bindemittel-Suspensionen bzw. Lösungen werden bevorzugt wässrige Suspensionen bzw. Lösungen engesetzt. Beim Einsatz wasserunlöslicher Lignine können aber auch andere Lösungsmittel, wie z.B. Alkohole, Alkohol-Wasser-Gemische und dergl. eingesetzt werden.

Die erfindungsgemäßen Bindemittel werden mit dem zu verleimenden holz- bzw. cellulosehaltigen Werkstoff an den vorgesehenen Leimstellen aufgetragen und bis zur Beendigung der Aushärtungsphase, im allgemeinen mehrere Minuten bis Stunden, in Kontakt gebracht, bei der Herstellung von Spanplatten vorzugsweise unter Preßdruck.

Während die durch Kaltpressung erhaltene Klebkraft des nach der DE-PS 30 37 992 hergestellten Bindemittelsystems für DIN-Holzprüflinge bei maximal 0,29 $N/cm^2$ lag, haben die erfindungsgemäß verleimten Prüflinge eine Querzugsfestigkeit von über 0,8 $N/cm^2$.

Nach der DE-PS 30 37 992 hergestellte Holzprüflinge, die kalt verpreßt wurden, sowie Spanplatten, die durch konventionelles Verpressen hergestellt wurden, sind nicht feuchtigkeitsbeständig: Bei 2-stündiger Wasserlagerung löst sich die Leimfuge. Demgegenüber findet bei erfindungsgemäß hergestellten Prüflingen nur die bei diesen Werkstoffen übliche Quellung von weniger als 10% statt; die Leimfuge bleibt erhalten.

Verwendet man demgegenüber eine Mischung von Sulfitablauge und Isocyanat (s. Mischung von Beispiel 3) ohne Enzymbeimischung, so erhält man Platten, die eine starke Quellung aufweisen, sodaß sie die DIN-Norm 68 761 nicht erfüllen.

Die Erfindung wird im folgenden anhand der Beispiele näher erläutert, wobei alle in der Figurenbeschreibung enthaltenen Merkmale als erfindungswesentlich angesehen werden.

Beispiel 1

Herstellung des Enzymkonzentrats

Der Basidiomycet Trametes versicolor (DSM 1977) wurde 5 Tage in einem 28 l Fermenter bei 30°C auf folgendem Medium kultiviert:

1 g/l elektrolytisch gefälltes Organosolvlignin
10 g/l Glucose
2,5 g/l L-Asparagin
0,5 g/l $KH_2PO_4$
0,5 g/l $MgSO_4 \cdot 7H_2O$
0,15 g/l DL-Phenylalanin
50 mg/l Adenin
10 ml/l Stammlösung aus
1,0 g/l $CaCl_2$
1,0 g/l $FeSO_4 \cdot 7H_2O$
0,1 g/l $MnSO_4 \cdot 4H_2O$
0,1 g/L $ZnSO_4 \cdot 7H_2O$
0,2 g/L $CuSO_4 \cdot 5H_2O$
pH 6,0

Nach 5 Tagen Kultivationszeit wurde das Pilzmycel durch Filtration von der enzymhaltigen Kulturflüssigkeit getrennt und die so erhaltene Enzymlösung durch Evaporation bei 50°C im Rotationsverdampfer auf ein Fünftel des Volumens konzentriert, so daß die Enzymaktivität im Konzentrat bei 200 U/ml lag.

Das Enzymkonzentrat kann in dieser Form zur Herstellung des Bindemittels verwendet werden.

## Beispiel 2

### Herstellung des Bindemittels und Verleimung

Aus sprühgetrockneter Ca-Sulfitablauge sowie Enzymkonzentrat nach Beispiel 1 und Polydiphenylmethandiisocyanat (PMDI) wurde ein Bindemittel mit 49,3 Gew.-% Feststoffgehalt zusammengemischt, das in Gew.-%, bezogen auf atro Holz folgende Zusammensetzung aufwies :

0,7 Gew.-% PMDI

7,5 Gew.-% Ca-Sulfitablauge

7,25 Gew.-% Enzymkonzentrat

15 Gew.-% dieses Bindemittels (bezogen auf atro Holz) wurden bei Raumtemperatur auf Nadelholzspäne gesprüht, die vorher mit 1 Gew.-% (bezogen auf atro Holz) einer Emulsion, bestehend aus 49,6 Gew.-% Paraffin, 0,77 Gew.-% 25% igem Ammoniak und 49,6 Gew.-% Wasser besprüht worden waren. Daraus wurden 20 bzw. 30 mm dicke dreischichtige Spanplatten gepreßt, deren Mittelschicht aus groben Spänen und deren Deckschicht aus feinen Spänen bestand.

Die Quellung nach DIN 68 761 betrug 5%

Ohne Besprühen mit Paraffin-Emulsion lag die Quellung etwa 3% höher.

## Beispiel 3

Es wurde verfahren wie in Beispiel 2, außer daß statt des Enzymkonzentrats das reine Ausgangskulturmedium ohne Enzym eingesetzt wurde. Die Quellung betrug in diesem Fall 15,4%

## Beispiel 4

Es wurde verfahren wie in Beispiel 2, außer daß kein Isocyanat eingesetzt wurde. Die Spanplatte zerfiel bei Wasserlagerung in ihre Einzelteile.

## Beispiel 5

Das Beispiel 2 wurde mit der folgenden Bindemittel-Zusammensetzung wiederholt :

6,7 Gew.-% Harnstoff-Formaldehyd-Harz (Feststoffgehalt ca 65%, Marke Moradur)

3,3 Gew.-% Ca-Sulfitablauge, getrocknet

6,7 Gew.-% Enzymkonzentrat alles bezogen auf atro Holz.

16,7 Gew.-% (bezogen auf atro Holz) wurden auf die Späne aufgesprüht, wie in Beispiel 2 beschrieben. Die Quellung betrug 6%.

## Beispiel 6

Das Beispiel 5 wurde mit Melamin-Formaldehyd-Harz, Feststoffgehalt ca 63%, anstelle von Harnstoff-Formaldehyd-Harz wiederholt.

Die Quellung betrug 10%

## Ansprüche

1. Emissionsarmes Bindemittel für holz- und cellulosehaltige Werkstoffe, bestehend aus Suspensionen bzw. Lösungen von ligninartigen Abfallstoffen aus dem chemischen Holzaufschluß der Lignocellulose in der Zellstoffindustrie bzw. von Abfällen der Holzrindenverwertung, und phenoloxidierenden Enzymen, **dadurch gekennzeichnet, daß** die Suspensionen bzw. Lösungen als zusätzliche Bindemittelkomponente Isocyanat-, Harnstoff-Formaldehyd- oder Melamin-Formaldehyd-Harze enthalten.

2. Bindemittel nach Anspruch 1, dadurch gekennzeichnet, daß die Menge des eingesetzten Isocyanat-, Harnstoff-Formaldehyd- oder Melamin-Formaldehyd-Harzes weniger als die Hälfte der in der Spanplattenindustrie eingesetzten Menge, bezogen auf atro Holz, beträgt.

3. Bindemittel nach Anspruch 1 und 2, dadurch gekennzeichnet, daß die eingesetzte Menge an Isocyanat 1 bis 2,5 Gew.-% bzw. die Menge an Harnstoff-Formaldehyd- oder Melamin-Formaldehydharz 4 bis 6 Gew.-%, bezogen auf atro Holz, beträgt.

4. Bindemittel nach Anspruch 1, dadurch gekennzeichnet, daß die Konzentration der phenoloxidierenden Enzyme 10 bis 5000 Enzymeinheiten (U/ml), bezogen auf die Gesamtmenge der wässrigen Suspension bzw. Lösung beträgt.

5. Bindemittel nach den Ansprüchen 1 und 4, dadurch gekennzeichnet, daß die Konzentration der phenoloxidierenden Enzyme 50 bis 1000 Enzymeinheiten beträgt.

6. Bindemittel nach Anspruch 1, dadurch gekennzeichnet, daß die ligninartigen Stoffe aus Sulfitablaugen, Organosolvlignin, ASAM-Lignin, Sulfatlignin bestehen.

7. Bindemittel nach Anspruch 1, dadurch gekennzeichnet, daß die Abfälle der Holzrindenverwertung aus Tanninen bestehen.

8. Bindemittel nach Anspruch 1, dadurch gekennzeichnet, daß die phenoloxidierenden Enzyme aus den folgenden Weißfäulepilzen gewonnen worden sind :

Polyporus spec., Stereum spec., Marasmius spec., Fomes spec., Pleurotus spec. oder Sporotrichum spec.

## Claims

1. A low-emission binder for wood- and cellulose-containing materials, composed of suspensions or solutions of lignin-type waste materials arising from the chemical pulping process of lignocellulose in the cellulose industry or from wastes of the bark utilization, and phenoloxidyzing enzymes, characterized in that the suspensions and solutions, respectively, contain isocyanate-, urea formaldehyde- or melamine formaldehyde resins forming an additional binder component.

2. A binder according to claim 1, characterized in that the amount of the isocyanate-, urea formaldehyde- or melamine formaldehyde resinsas employed is less than half the amount employed in the chipboard industry, based on atro wood.

3. A binder according to claims 1 and 2, characterized in that the amount of isocyanate as employed corresponds to between 1 and 2.5 percent by weight and the amount of urea formaldehyde- or melamine formaldehyde resin corresponds to between 4 and 6 percent by weight, based on atro wood.

4. A binder according to claim 1, characterized in that the concentration of the phenoloxidizing enzymes amounts to between 10 and 5000 enzyme units (U/ml), based on the total amount of the aqueous suspension and solution, respectively.

5. A binder according to claims 1 and 4, characterized in that the concentration of the phenoloxidizing enzymes amounts to between 50 and 1000 enzyme units.

6. A binder according to claim 1, characterized in that the lignin-type substances consist of sulphite waste liquor, organosolvlignin, ASAM-lignin, sulphate lignin.

7. A binder according to claim 1, characterized in that the waste materials of the bark utilization consist of tannins.

8. A binder according to claim 1, characterized in that the phenoloxidizing enzymes have been recovered from the following white rot fungi : Polyporus spec., Stereum spec., Marasmius spec., Fomes spec., Pleurotus spec. or Sporotrichum spec.

## Revendications

1. Liant à faible émission, pour matériaux contenant du bois et de la cellulose, se composant de suspensions, respectivement de solutions de déchets ligneux provenant de la réduction chimique du bois de la lignocellulose dans l'industrie des produits cellulosiques, respectivement des déchets de l'exploitation des écorces de bois, et d'enzymes phénoloxydants, caractérisé en ce que les suspensions, respectivement les solutions contiennent à titre de composants supplémentaire du liant, des résines à base d'isocyanate, des résines urée formaldéhyde, ou des résines mélamine formaldéhyde.

2. Liant selon la revendication 1, caractérisé en ce que la quantité utilisée de résine à base d'isocyanate, de résine urée formaldéhyde, ou de résine mélamine formaldéhyde est inférieure à la moitié de la quantité utilisée dans l'industrie des panneaux de particules, rapportée au bois absolument sec.

3. Liant selon les revendications 1 et 2, caractérisé en ce que, par rapport au bois absolument sec, la quantité utilisée de résine à base d'isocyanate est de 1 à 2,5% en poids et la quantité de résine urée formaldéhyde ou de résine mélamine formaldéhyde est de 4 à 6% en poids.

4. Liant selon la revendication 1, caractérisé en ce que la concentration des enzymes phénoloxydants est de 10 à 5000 unités d'enzyme (U/ml), rapportée à la quantité globale de la suspension, respectivement de la solution aqueuse.

5. Liant selon les revendications 1 et 4, caractérisé en ce que la concentration des enzymes phénoloxydants est de 50 à 1000 unités d'enzyme.

6. Liant selon la revendication 1, caractérisé en ce que les substances ligneuses se composent de lessives résiduaires contenant du sulfite, de lignine de solvants organiques, d'ASAM-lignine, de sulfate-lignine.

7. Liant selon la revendication 1, caractérisé en ce que les déchets de l'exploitation des écorces de bois se composent de tanins.

8. Liant selon la revendication 1, caractérisé en ce que les enzymes phénoloxydants sont obtenus à partir des champignons de pourriture alvéolaire suivants : polyporus spec., stereum spec., marasmius spec., fomes spec., pleurotus spec., ou sporotrichum spec.